# EUROPÄISCHE PATENTSCHRIFT

(11) **EP 3 191 542 B1**
(45) Veröffentlichungstag und Bekanntmachung des Hinweises auf die Patenterteilung: **15.08.2018**
(21) Anmeldenummer: 16714437.7
(22) Anmeldetag: 06.04.2016
(51) Int. Cl.: C08G 77/26

(54) **VERFAHREN ZUR HERSTELLUNG VON AMINOGRUPPEN AUFWEISENDEN ORGANOSILICIUMVERBINDUNGEN**
METHOD FOR PRODUCING ORGANOSILICON COMPOUNDS HAVING AMINO GROUPS
PROCÉDÉ DE PRODUCTION DE COMPOSÉS ORGANOSILICIÉS À GROUPES AMINO

(30) Priorität: 27.04.2015 DE 102015207673
(43) Veröffentlichungstag der Anmeldung: 19.07.2017
(73) Patentinhaber: Wacker Chemie AG, 81737 München (DE)
(72) Erfinder: FRITZ-LANGHALS, Elke, 85521 Ottobrunn (DE); POPP, Alfred, 82008 Unterhaching (DE)
(74) Vertreter: Fritz, Helmut
(86) Internationale Anmeldenummer: PCT/EP2016/057471
(87) Internationale Veröffentlichungsnummer: WO 2016/173811

(56) Entgegenhaltungen:
- WO-A1-03/068845

## Beschreibung

Die Erfindung betrifft ein Verfahren zur katalysatorfreien Herstellung von Aminogruppen aufweisenden Organosiliciumverbindungen mit einem geringen Anteil an Si-OH- und Si-OR-Gruppierungen unter Verwendung von (Aminoalkyl)alkoxysilanen.

Aminoalkylpolysiloxane werden in der Technik vielseitig eingesetzt. Z.B. können Block-Copolymere durch Polyaddition unter Verwendung von Isocyanaten hergestellt werden. Durch Kombination verschiedener Polymerblöcke ist so eine Vielzahl von Produkten mit maßgeschneiderten Eigenschaften darstellbar. Beim Aufbau von Block-Copolymeren spielt die Reinheit der eingesetzten Aminoalkylpolysiloxane eine große Rolle. Die Kettenenden müssen zu einem hohen Grad durch Aminogruppen funktionalisiert sein, da sonst keine Block-Copolymeren mit hohen Molekulargewichten erreicht werden können.

Verfahren zur Darstellung von Aminoalkylpolysiloxanen sind bereits bekannt.

Äquilibrierverfahren unter Verwendung von 1,3-Bis(3-aminopropyl)tetramethyldisiloxan sind in der US-A-5461134 und in der EP-B-0739372 beschrieben. Diese Verfahren sind umständlich, da sie lange Reaktionszeiten erfordern. Bei Äquilibrierungsverfahren besteht außerdem der prinzipielle Nachteil, dass Produkte mit einem verhältnismäßig hohen Silanolanteil erhalten werden. Si-OH-Kettenenden fungieren bei einer nachfolgenden Reaktion mit Diisocyanaten aber als chemisch labiler Kettenstopper und verhindern dadurch das Erreichen hoher Molekulargewichte. Ein weiterer Nachteil der Anwesenheit nicht-umgesetzter Si-OH-Kettenenden in den Aminoalkylpolysiloxanen ist, dass an diesen ein hydrolytischer Kettenabbau einsetzen kann. Solche Materialien zeigen daher eine geringere Stabilität in Gegenwart von Feuchtigkeit.

US-A-2011/301374 beschreibt ein Verfahren, wonach verbleibende Si-OH-Kettenenden durch Umsetzung mit Silazanen in die entsprechenden Aminoalkylgruppen überführt werden können. Zur Erreichung hoher Umsetzungsgrade sind demnach zwei Reaktionsschritte erforderlich; dies verteuert die Herstellung erheblich.

US-A-4633002 beschreibt ein Verfahren zur Herstellung von Aminoalkylpolysiloxanen, bei dem Silanol-terminierte Siloxane mit Amin-funktionellen Trialkoxysilanen in Gegenwart von 0,4 bis 1 % organometallischer Katalysatoren, insbesondere Zinnverbindungen umgesetzt werden.
Von Nachteil bei diesem Verfahren sind die notwendigen hohen Temperaturen von ca. 275°C, die aufgrund von Zersetzungsprozessen wie dort berichtet zu Gelbfärbungen des Reaktionsprodukts führen.
EP-A-0628589 beschreibt ein Verfahren zur Herstellung von Aminoalkylpolysiloxanen aus Silanol-terminierten Siloxanen, Amin-funktionellen Dialkoxysilanen und mindestens 0,01 bis 1% einer Kombination aus den basischen Katalysatoren Barium- oder Strontiumhydroxid und Natriumborat bzw. Natriumphosphat. Einer technischen Anwendung dieses Verfahrens steht insbesondere die Toxizität der Schwermetalle Barium und Strontium entgegen.

EP-A-1580215 beschreibt ein Verfahren zur Herstellung von Aminoalkylpolysiloxanen aus Silanol-terminierten Siloxanen und Amin-funktionellen Dialkoxysilanen in Gegenwart von 30 bis 200 ppm der basischen Katalysatoren Natriumhydroxid, Natriummethanolat oder Natriumsilanolat.

US-B-7238768 beschreibt die Herstellung von aminofunktionellen Polysiloxanen durch Umsetzung von Hydroxy-funktionellen Polysiloxanen mit einem Unterschuss an aminofunktionellen Silanen bezogen auf die eingesetzten Si-OH-Gruppen und in Gegenwart von Carbonsäuren. Nach der dort offenbarten Anweisung erfolgt parallel zur Reaktion des (Aminoalkyl)alkoxysilans mit den Si-OH-Gruppen in situ eine Umsetzung der Si-OH-Gruppen mit zugesetztem Alkohol unter Bildung von Si-O-Alkyl-Gruppen. Wie dort beschrieben enthalten die hergestellten Aminoalkylpolysiloxane ausnahmslos sowohl Si-OH als auch Si-O-Alkyl-Gruppen.

Nach der in US-B-7238768 offenbarten Anweisung erfolgt parallel zur Reaktion des (Aminoalkyl)alkoxysilans mit den Si-OH-Gruppen (der eigentlichen Stopperungsreaktion), zudem eine Kettenverlängerung durch die Reaktion von Si-OH-Einheiten mit Si-OH-Einheiten unter Wasserabspaltung, die ebenfalls durch Einwirkung des sauren Katalysators katalysiert wird.

In der EP-A-1580215 wird zudem berichtet, dass unter den in der US-B-7238768 angegebenen Bedingungen gelb gefärbte Produkte entstehen, die eine geringe Lagerstabilität aufweisen.

Das Verfahren ist daher nicht zur Herstellung von aminofunktionellen Polysiloxanen mit einem geringen Anteil an Si-OH-Gruppen und Si-O-Alkylgruppen geeignet. Als labiler Kettenstopper wirken neben den Si-OH-Gruppen auch die Si-O-Alkyl-Gruppen, weil diese bei der Lagerung in Gegenwart von Luftfeuchte hydrolytisch langsam in Si-OH-Gruppen übergehen und dabei flüchtige Alkohole freisetzen, wobei die auf diesem Weg erzeugten Si-OH-Gruppen die o.g. Nachteile haben.

Das Verfahren ist außerdem nicht zur Herstellung von aminofunktionellen Polysiloxanen mit einem konstanten Molekulargewicht geeignet, da durch Kettenkondensation Produkte mit deutlich erhöhtem Molekulargewicht gebildet werden. Eine konstante Kettenlänge ist aber für die o.g. Anwendungen in Block-Copolymeren von großer Bedeutung, da diese für die physikalischen Eigenschaften der erzeugten Materialien verantwortlich ist.
Gelbfärbungen und verminderte Lagerstabilität mindern ebenfalls die Qualität der Produkte.

US-A-6284860 beschreibt die Umsetzung von OH-terminierten Organopolysiloxanen mit Di- und Trialkoxy(aminoalkyl)silanen in Gegenwart von Brønstedt- oder Lewis-Säuren unter Bildung von Organopolysiloxanmassen, die Anteile von etwa 30 bis 60 % Si-O-Alkyl-Gruppen enthalten.
Gemäß der in US-A-6284860 gegebenen Anweisung werden mindestens stöchiometrische Mengen Säure bezogen auf die vorhandenen Si-OH-Gruppen für die Umsetzung benötigt, die dann als Amin-Salze im Reaktionsprodukt verbleiben.

Dieses Verfahren ist daher ungeeignet zur Herstellung von aminofunktionellen Polysiloxanen mit einem geringen Anteil an Si-O-Alkylgruppen. Es ist außerdem ungeeignet, da die entstehenden hohen Salzgehalte zu einer Verschlechterung der physikalischen Eigenschaften der Zielprodukte, wie z.B. der Rheologie und der optischen Transparenz, führen.

In der WO2013/160104 ist ein Verfahren zur Herstellung von Aminogruppen aufweisenden Organosiliciumverbindungen mit einem geringen Anteil an Si-OH- und Si-OR-Gruppierungen unter Verwendung von (Aminoalkyl)monoalkoxysilanen in Gegenwart von katalytischen Mengen Säure beschrieben. Das dort beschriebene Verfahren ist geeignet zur Darstellung von Aminoalkylpolysiloxanen, die sich aufgrund ihrer hohen Reinheit prinzipiell für die eingangs erwähnten Verwendungen eignen.

Insbesondere bei der Herstellung von hochmolekularen Aminoalkylpolysiloxanen können sich jedoch selbst nur sehr geringe Mengen des Katalysators negativ auf die Transparenz des Materials auswirken. Es kommt häufig zu Trübungen durch den feinstverteilten Katalysator, die auch noch in den Folgeprodukten zu beobachten sind. Die Entfernung von Trübungen in einem hochmolekularen und damit hochviskosen Material bereitet technisch große Probleme. In vielen Fällen tritt die Trübung zeitverzögert bei der Lagerung des Materials auf, so dass dann keine konstant hohe Qualität des Materials für die weitere Umsetzung zur Verfügung steht. Das Dokument WO 03/068845 offenbart in seinen Beispielen ein Verfahren, das dem vorliegenden Verfahren entspricht. Im Beispiel 1, 1000 g eines bishydroxy-terminiertes Polydimethylsiloxan und 79.2 g eines monoalkoxy-(aminoalkyl)silan ohne Katalysator. Die äquivalente Menge an Silan ist 2 Mol pro mol Polymer. Im Beispiel 3 beträgt die Temperatur 50 °C. Die Amingruppe ist durch eine Methylengruppe am Si-Atom verbunden.

Gegenstand der Erfindung ist daher ein Verfahren zur Herstellung von aminofunktionellen Polyorganosiloxanen, bei dem.
(A) Organosiloxane, welche Si-OH-Gruppen enthalten, mit
(B) mindestens stöchiometrischen Mengen Monoalkoxy(aminoalkyl)-silanen bezogen auf die Si-OH-Gruppen,
   umgesetzt werden, wobei katalytisch wirksame Zusätze ausgewählt aus Säure, Base oder metallorganischer Verbindung in Mengen von weniger als 0,1 ppm Säure, weniger als 30 ppm Base und weniger als 0,4 % metallorganische Verbindung eingesetzt werden.

Es wurde nun überraschend gefunden, dass Aminoalkylpolysiloxane mit einem geringen Anteil an Si-OH-Gruppen und Si-O-Alkyl-gruppen durch Umsetzung von Hydroxypolysiloxanen (A) mit mindestens stöchiometrischen Mengen an Monoalkoxy(aminoalkyl)-silanen (B) hergestellt werden können. Katalytisch wirksame Zusätze sind dabei nicht erforderlich.

Die hergestellten aminofunktionellen Polyorganosiloxane weisen vorzugsweise einen Anteil an Si-OH-Gruppen und Si-O-Alkyl-Gruppen von zusammen weniger als 5 Mol-% bezogen auf die Aminoalkylgruppen auf.

Das erfindungsgemäße Verfahren ist einfach durchzuführen und führt zu Produkten mit einer hohen Reinheit. Nebenreaktionen, wie z.B. die Bildung von Si-O-Alkyl-Gruppen, finden nur in sehr geringem Umfang statt. Die Kettenlänge des Polysiloxans bleibt im Wesentlichen, bis auf die hinzutretenden Stopperungseinheiten, konstant. Kettenkondensationsreaktionen finden höchstens in einem unbedeutenden Umfang statt. Die erhaltenen aminofunktionellen Polysiloxane sind klar und farblos. Es treten insbesondere aufgrund der fehlenden katalytisch wirksamen Zusätze auch bei längerer Lagerdauer über Wochen keine Nachtrübungen oder Verfärbungen auf. Aminofunktionelle Polysiloxane der allgemeinen Formel I

**(SiO_{4/2})ₖ**(**R¹SiO_{3/2})ₘ**(**R¹₂SiO_{2/2})ₚ(R¹₃SiO_{1/2})q[O_{1/2}SiR¹₂-R**-**NR²R³]ₛ[O_{1/2}H]ₜ** (I),

werden durch Umsetzung von Organosiloxanen der allgemeinen Formel (II)

**(SiO_{4/2})ₖ(R¹SiO_{3/2})**ₘ**(R¹₂SiO_{2/2})**ₚ**(R¹₃SiO_{1/2})q[O_{1/2}H]ᵣ** (II),

mit mindestens der stöchiometrischen Menge eines Mono-alkoxy(aminoalkyl)silans der allgemeinen Formel (III)

**R²R³N-R-SiR¹₂(OR⁴)** (III),

hergestellt,
wobei
R einen unsubstituierten oder halogensubstituierten Alkylenrest mit 1 bis 12 C-Atomen,
**R^{x}** Wasserstoff oder einen unsubstituierten oder mit Substituenten, die ausgewählt werden aus -CN und Halogen substituierten C₁-C₁₀ - Kohlenwasserstoffrest,
**R¹** ein Wasserstoffatom oder einen unsubstituierten oder mit Substituenten, die ausgewählt werden aus -CN, N**R^{x}**₂, COOH, COO**R^{x}**, -Halogen, -Acryl, -Epoxy, -SH, -OH und -CON**R^{x}**₂ substituierten Si-C gebundenen C₁-C₂₀ -Kohlenwasserstoffrest oder C₁-C₁₅ -Kohlenwasserstoffoxyrest, in denen jeweils eine oder mehrere, einander nicht benachbarte Methyleneinheiten durch Gruppen -O-, -CO-, -COO-, -OCO- oder -OCOO-, -S-, oder **NR^{x}** ersetzt sein können und in denen eine oder mehrere, einander nicht benachbarte Methineinheiten durch Gruppen -N=, -N=N-, oder -P= ersetzt sein können,
**R²** und **R³** Wasserstoff oder unverzweigte, verzweigte oder cyclische gesättigte oder ungesättigte Alkylgruppe mit 1 bis 12 C-Atomen oder Arylgruppe oder Aralkylgruppe, wobei einzelne nicht benachbarte Methyleneinheiten durch Stickstoffatome oder Sauerstoffatome ersetzt sein können,
**R⁴** lineare oder verzweigte Alkylgruppe mit 1 bis 8 C-Atomen, wobei nicht-benachbarte Methyleneinheiten durch Sauerstoffe ersetzt sein können,
**s** Werte von mindestens 1,
**r** Werte von mindestens 1,
**s** + **t** den Wert von **r** und
**k** + **m** + **p** + **q** Werte von mindestens 2 bedeuten
und **s** : **t** größer oder gleich 10 beträgt.

Der Alkylenrest **R** kann unverzweigt, verzweigt oder cyclisch, gesättigt oder ungesättigt sein. Bevorzugt ist R ein zweiwertiger unverzweigter oder verzweigter gesättigter Alkylenrest mit 2 bis 8 C-Atomen, besonders bevorzugt mit 2 bis 4, ganz besonders bevorzugt mit 3 C-Atomen, inbesondere bevorzugt eine n-Propylengruppe.

**R¹** weist vorzugsweise 1 bis 12 Atome, insbesondere 1 bis 6 Atome, vorzugsweise nur Kohlenstoffatome oder ein Alkoxysauerstoffatom und sonst nur Kohlenstoffatome auf. Vorzugsweise ist **R¹** ein geradkettiger, verzweigter oder cyclischer C₁-C₆-Alkylrest. Besonders bevorzugt sind die Reste Methyl, Ethyl, Phenyl, Vinyl und Trifluorpropyl.

Bevorzugt sind **R²** und **R³** unabhängig voneinander Wasserstoff oder unverzweigte, verzweigte oder cyclische gesättigte oder ungesättigte Alkylgruppe mit 1 bis 6 C-Atomen oder Arylgruppe, wobei nicht benachbarte Methyleneinheiten durch Stickstoffatome oder Sauerstoffatome ersetzt sein können.

Besonders bevorzugt sind **R²** und **R³** unabhängig voneinander Wasserstoff oder C₁-C₅ Alkylgruppe, wobei einzelne nicht benachbarte Methylengruppen durch Stickstoffatome ersetzt sein können.

Ganz besonders bevorzugt sind **R²** und **R³** Wasserstoff.

Bevorzugt ist **R⁴** eine lineare oder verzweigte Alkylgruppe mit 1 bis 5 C-Atomen, wobei bevorzugt 1 bis 2 nicht benachbarte Methyleneinheiten durch Sauerstoffe ersetzt sein können. Besonders bevorzugt sind Alkylgruppen mit 1 bis 5 C-Atomen, wobei besonders bevorzugt eine Methylengruppe durch Sauerstoff ersetzt ist.

Beispiele für Reste **R⁴** sind Methyl, Ethyl, n-Propyl, i-Propyl 2-Methoxyethyl oder 2-Methoxypropyl.

Bevorzugt ist der Anteil an Si-OH-Gruppen in den Verbindungen der allgemeinen Formel I gering gegenüber dem Anteil an aminofunktionellen Alkylgruppen. Bevorzugt nimmt das Verhältnis s : t in der allgemeinen Formel I Werte von größer oder gleich 20 an, besonders bevorzugt Werte von größer oder gleich 50.

Das aminofunktionelle Organosiloxan der allgemeinen Formel I kann linear, cyclisch oder verzweigt sein.

Die Summe von **k**, **m**, **p**, **q**, **s** und **t** ist vorzugsweise eine Zahl von 10 bis 100000, insbesondere 20 bis 20000.

Bevorzugte verzweigte Organosiloxane sind die Organosiliconharze, welche entsprechend der allgemeinen Formel I T- und Q-Einheiten enthalten, d.h. k + m > 0. Besonders bevorzugt sind Harze, bei denen k + m mindestens 5 % und höchstens 90 % bezogen auf die Summe von **k, m, p, q,** s und **t** ist.

Bevorzugte lineare aminofunktionelle Organosiloxane sind die endständig aminofunktionalisierten Organosiloxane der allgemeinen Formel (Ia),

**(R¹₂SiO_{2/2})ₚ**(**R¹₃SiO_{1/2})_{q}[O_{1/2}SiR¹₂-R-NR²R³]ₛ[O_{1/2}H]t**

mit **s** + **t** + **q** = 2,
wobei **q** Werte von 0 oder 1 einnehmen kann.
**p** nimmt bevorzugt Werte von 20 bis 50000 an, insbesondere von 50 bis 2000.

Besonders bevorzugte lineare aminofunktionelle Organosiloxane sind die α,ω-endständig aminofunktionalisierten Organosiloxane mit **q** = 0 und s + t = 2.

Katalytisch wirksame Zusätze sind bei dem Verfahren sowohl unnötig als auch unerwünscht. Als Säure werden Brønstedt-Säuren und Lewis-Säuren verstanden, insbesondere Brønstedt-Säuren mit pKₛ-Werten bis + 5. Als Base werden insbesondere Metallhydroxyde, Metalloxide Metallalkoxylate und Metallsilanolate verstanden. Als metallorganische Verbindung werden insbesondere Zinn-organische Verbindungen verstanden.

Vorzugsweise werden weniger als 0,01 ppm Säure eingesetzt. Vorzugsweise werden weniger als 10 ppm Base eingesetzt. Vorzugsweise werden weniger als 0,1 % metallorganische Verbindung eingesetzt. Insbesondere wird das Verfahren ohne katalytisch wirksame Zusätze durchgeführt.

Bevorzugt wird das Verfahren bei Temperaturen von mindestens 50°C, besonders bevorzugt von mindestens 90°C durchgeführt, und höchstens bei 200°C, besonders bevorzugt bei höchstens 150°C.

Bevorzugt wird das Verfahren unter Normaldruck oder unter vermindertem Druck durchgeführt. Besonders bevorzugte Drucke liegen zwischen maximal 500 mbar und 1 mbar.

Das erfindungsgemäße Verfahren kann als Batchreaktion, als Semi-batch-reaktion oder kontinuierlich ausgeführt werden. Beispielsweise können die Reaktionskomponenten bei Umgebungstemperatur gemischt und die Mischung bis zur Reaktionstemperatur erwärmt werden.
Vorzugsweise wird die Reaktion unter Durchmischung durchgeführt. Hierbei können die dem Fachmann bekannten Mischverfahren angewendet werden. Beispielsweise kann die Durchmischung durch Rühren erfolgen.

In einer bevorzugten Ausführungsform wird der bei der Umsetzung freiwerdende Alkohol während oder nach der Umsetzung aus dem Reaktionsgemisch entfernt. Die Entfernung erfolgt bevorzugt durch Destillation, beispielsweise durch Destillation unter vermindertem Druck. Die dem Fachmann bekannten Destillationstechniken, beispielsweise Gleichgewichtsdestillation über eine Kolonne, Kurzwegdestillation oder Dünnschichtverdampfung können hierzu verwendet werden.

Die erfindungsgemäße Reaktion kann auch kontinuierlich durchgeführt werden. Hierbei eignen sich die dem Fachmann bekannten technischen Ausführungen, beispielsweise Rohrreaktoren, Schlaufenreaktoren oder Rührkesselkaskaden.

Insbesondere bei der Umsetzung von hochmolekularen Polysiloxanen wird die Umsetzung durch Anwendung eines Überschusses an Amin-funktionellem Alkoxysilan beschleunigt. Da bei diesen Systemen der benötigte Gewichtsanteil an Silan sehr gering ist, wirkt sich der Überschuss nicht wesentlich auf die Wirtschaftlichkeit des Verfahrens aus.
Setzt man beispielsweise ein Hydroxypolysiloxan der allgemeinen Formel 1a mit einem Molekulargewicht von 14000 ein, so beträgt die stöchiometrisch benötigte Menge an 3-Aminopropyldimethylmethoxysilan nur ca. 2 Gewichts-% der Gesamtreaktionsmasse.

Vorzugsweise wird das Monoalkoxy(aminoalkyl)silan (B) in einer molaren Menge von mindestens 1,2 und maximal 10 Äquivalenten bezogen auf vorhandene Si-OH-Einheiten, besonders bevorzugt in molaren Anteilen von mindestens 1,5 und maximal 5 Äquivalenten bezogen auf vorhandene Si-OH-Einheiten im Organosiloxan (A) eingesetzt.

Für die Berechnung des für eine vollständige Umsetzung notwendigen Überschusses an eingesetztem (Aminoalkyl)alkoxysilan (B) ist der im Hydroxypolysiloxan (A) vorhandene Wassergehalt zu berücksichtigen, da das (Aminoalkyl)alkoxysilan (B) mit Wasser unter Bildung des entsprechenden Disiloxans verbraucht wird. Dieses kann durch Entflüchtigung des Reaktionsgemisches nach der Umsetzung auf einfache Weise entfernt werden.

Es können bei der Umsetzung weitere Komponenten, beispielsweise Lösungsmittel, in Mengen von mindestens 1 % und höchstens 200 %, bevorzugt mindestens 10 % und höchstens 100 % bezogen auf die Gesamtreaktionsmasse eingesetzt werden. Falls Lösungsmittel verwendet werden, sind Lösungsmittel oder Lösungsmittelgemische mit einem Siedepunkt bzw. Siedebereich von bis zu 120° C bei 0,1 MPa bevorzugt. Beispiele für Lösungsmittel sind Ether wie Methyl-tert-butylether, Tetrahydrofuran oder Dioxan, Nitrile wie Acetonitril oder Propionitril, DMSO, Kohlenwasserstoffe wie beispielsweise Heptan, Methylcyclohexan oder Toluol.

Alle vorstehenden Symbole der vorstehenden Formeln weisen ihre Bedeutungen jeweils unabhängig voneinander auf. In allen Formeln ist das Siliciumatom vierwertig.

In den folgenden Beispielen sind, falls jeweils nicht anders angegeben, alle Mengen- und Prozentangaben auf das Gewicht bezogen, alle Drücke 0,10 MPa (abs.) und alle Temperaturen 20°C.
Alle Beispiele werden inertisiert bzw. unter Schutzgas ausgeführt.

### Beispiel 1

100 g α,ω-Bishydroxy-terminiertes Polydimethylsiloxan mit einem Mₙ von 13810 g/mol, bestimmt durch ¹H-NMR-Spektroskopie, entsprechend 7,24 mMol Si-OH-Gruppen, und einem Wassergehalt von 115 ppm, entsprechend 0,64 mmol, bestimmt durch Karl-Fischer Titration, wird auf 140°C erhitzt. Bei dieser Temperatur und ca. 100 mbar Druck werden 3,2 g (21,7 mMol, entsprechend 1,50 Äquivalenten bezogen auf Si-OH) 99 proz. 3-Aminopropyldimethylmethoxysilan zugegeben und das gebildete Methanol als Destillat in einer gekühlten Vorlage aufgefangen. Nach einer Gesamtreaktionszeit von 1 Std. wird das Reaktionsprodukt, das α,ω-Bisaminopropyl-terminierte Polydimethylsiloxan, NMR-spektroskopisch untersucht. Es sind keine Si-OH Gruppierungen nachweisbar. Das Produkt enthält noch 21 Mol % 3-Aminopropyldimethylmethoxysilan bezogen auf die molare Menge an Aminopropyl-Endgruppen des Polysiloxans. Durch Senkung des Drucks auf ca. 1 mbar werden überschüssiges Silan und Methanol aus dem Produkt entfernt. Das Produkt ist eine klare und farblose Flüssigkeit.

### Beispiel 2

Das Beispiel 1 wird unter Verwendung von 200 g (14,5 mmol), α,ω-Bishydroxy-terminiertem Polydimethylsiloxan mit einem Mₙ von 13810 g/mol und 4,7 g (32 mmol, 1,1 Äquivalente) Silan wiederholt. Die Gesamtreaktionszeit beträgt 4 Std.

Das Reaktionsprodukt enthält bei Reaktionsende, bezogen auf die molare Menge an Aminopropyl-Endgruppen, 0,6 Mol % Si-OH-Endgruppen. Durch Senkung des Drucks auf ca. 1 mbar werden Spuren von überschüssigem Silan und Methanol aus dem Produkt entfernt. Das Produkt ist eine klare und farblose Flüssigkeit.

### Beispiel 3

Das Beispiel 2 wird unter Verwendung von 5,5 g (37,7 mmol, 1,3 Äquivalente) Silan bei 140°C / 60 mbar wiederholt. Die Gesamtreaktionszeit beträgt 2 Std.

Das Reaktionsprodukt enthält bei Reaktionsende, bezogen auf die molare Menge an Aminopropyl-Endgruppen, 1,3 Mol % Si-OH-Endgruppen und noch 7,4 Mol % nicht-umgesetztes Silan. Durch Senkung des Drucks auf ca. 1 mbar werden diese zusammen mit Methanol aus dem Produkt entfernt. Das Produkt ist eine klare und farblose Flüssigkeit.

## Patentansprüche

1. Verfahren zur Herstellung von aminofunktionellen Polyorganosiloxanen der allgemeinen Formel I
**(SiO_{4/2})**ₖ**(R¹SiO_{3/2})**ₘ**(R¹₂SiO_{2/2})**ₚ**(R¹₃SiO_{1/2})**q**[O_{1/2}SiR¹₂-R-NR²R³]ₛ[O_{1/2}H]**ₜ (I),
bei dem
(A) Organosiloxane, welche Si-OH-Gruppen enthalten, der allgemeinen Formel (II)
**(SiO_{4/2})**ₖ**(R¹SiO_{3/2})ₘ(R¹₂SiO_{2/2})p(R¹₃SiO_{1/2})q[O_{1/2}H]**ᵣ (II),
mit
(B) mindestens der stöchiometrischen Menge eines Mono-alkoxy(aminoalkyl)silans bezogen auf die Si-OH-Gruppen der allgemeinen Formel (III)
**R²R³N-R-SiR¹₂(OR⁴)** (III),
umgesetzt werden, wobei katalytisch wirksame Zusätze ausgewählt aus Säure, Base oder metallorganischer Verbindung in Mengen von weniger als 0,1 ppm Säure, weniger als 30 ppm Base und weniger als 0,4 % metallorganische Verbindung eingesetzt werden, wobei
**R** einen unsubstituierten oder halogensubstituierten Alkylenrest mit 2 bis 12 C-Atomen,
**R^{x}** Wasserstoff oder einen unsubstituierten oder mit Substituenten, die ausgewählt werden aus -CN und Halogen substituierten C₁-C₁₀ - Kohlenwasserstoffrest,
**R¹** ein Wasserstoffatom oder einen unsubstituierten oder mit Substituenten, die ausgewählt werden aus -CN, N**R^{x}**₂, COOH, COO**R^{x}**, -Halogen, -Acryl, -Epoxy, -SH, -OH und -CON**R^{x}**₂ substituierten Si-C gebundenen C₁-C₂₀ -Kohlenwasserstoffrest oder C₁-C₁₅ -Kohlenwasserstoffoxyrest, in denen jeweils eine oder mehrere, einander nicht benachbarte Methyleneinheiten durch Gruppen -O-, -CO-, -COO-, -OCO- oder -OCOO-, -S-, oder **NR^{x}** ersetzt sein können und in denen eine oder mehrere, einander nicht benachbarte Methineinheiten durch Gruppen -N=, -N=N-, oder -P= ersetzt sein können,
**R²** und **R³** Wasserstoff oder unverzweigte, verzweigte oder cyclische gesättigte oder ungesättigte Alkylgruppe mit 1 bis 12 C-Atomen oder Arylgruppe oder Aralkylgruppe, wobei einzelne nicht benachbarte Methyleneinheiten durch Stickstoffatome oder Sauerstoffatome ersetzt sein können,
**R⁴** lineare oder verzweigte Alkylgruppe mit 1 bis 8 C-Atomen, wobei nicht-benachbarte Methyleneinheiten durch Sauerstoffe ersetzt sein können,
**s** Werte von mindestens 1,
**r** Werte von mindestens 1,
**s** + **t** den Wert von **r** und
**k** + **m** + **p** + **q** Werte von mindestens 2 bedeuten
und **s** : **t** größer oder gleich 10 beträgt.

2. Verfahren nach Anspruch 1, bei dem **R¹** ein geradkettiger, verzweigter oder cyclischer C₁-C₆-Alkylrest ist.

3. Verfahren nach einem oder mehreren der vorangehenden Ansprüche, bei dem **R²** und **R³** Wasserstoff sind.

4. Verfahren nach einem oder mehreren der vorangehenden Ansprüche, bei dem **R⁴** Alkylgruppe mit 1 bis 5 C-Atomen bedeutet.

5. Verfahren nach einem oder mehreren der vorangehenden Ansprüche, bei dem weniger als 0,01 ppm Säure vorhanden ist.

6. Verfahren nach einem oder mehreren der vorangehenden Ansprüche, welches bei Temperaturen von 50°C bis 150°C durchgeführt wird.

7. Verfahren nach einem oder mehreren der vorangehenden Ansprüche, bei dem das Monoalkoxy(aminoalkyl)silan (B) in einer molaren Menge von mindestens 1,2 und maximal 10 Äquivalenten bezogen auf vorhandene Si-OH-Einheiten im Organosiloxan (A) eingesetzt wird.

## Claims

1. Method for producing aminofunctional polyorganosiloxanes of general formula I
**(SiO_{4/2})**ₖ(**R¹SiO_{3/2})ₘ(R¹₂SiO_{2/2})ₚ**(**R¹₃SiO_{1/2})_{q}[O_{1/2}SiR¹2-R-NR²R³]ₛ[O_{1/2}H]ₜ** (I),
which comprises reacting
(A) organosiloxanes which contain Si-OH groups, of general formula (II)
**(SiO_{4/2})ₖ(R¹SiO_{3/2})ₘ(R¹₂SiO_{2/2})ₚ(R¹₃SiO_{1/2})_{q}**[**O_{1/2}H]ᵣ** (II),
with
(B) at least the stoichiometric amount of a monoalkoxy(aminoalkyl)silane, based on the Si-OH groups, of general formula (III)
**R²R³N-R-SiR¹2(OR⁴)** (III),
while utilizing catalytically active admixtures selected from acid, base or organometallic compound in amounts of less than 0.1 ppm of acid, less than 30 ppm of base and less than 0.4% of organometallic compound, wherein
**R** is an unsubstituted or halogen-substituted alkylene radical of 2 to 12 carbon atoms,
**R^{x}** is hydrogen, an unsubstituted C₁-C₁₀ hydrocarbyl radical or a C₁-C₁₀ hydrocarbyl radical substituted with substituents selected from -CN and halogen,
**R¹** is a hydrogen atom or a C₁-C₂₀ hydrocarbyl or C₁-C₁₅ hydrocarbyloxy radical which is bonded Si-C and is unsubstituted or substituted with substituents selected from -CN, N**R^{x}**₂, COOH, COO**R^{x}**, -halogen, -acryloyl, -epoxy, -SH, -OH and -CON**R^{x}**₂ and in each of which one or more mutually nonadjacent methylene units at a time may be replaced by groups -O-, -CO-, -COO-, -OCO- or -OCOO-, -S-, or **NR^{x}** and in each of which one or more mutually nonadjacent methine units may be replaced by groups -N=, -N=N-, or -P=,
**R²** and **R³** are each hydrogen or unbranched, branched or cyclic saturated or unsaturated alkyl of 1 to 12 carbon atoms or aryl or aralkyl where individual nonadjacent methylene units may be replaced by nitrogen atoms or oxygen atoms,
**R⁴** is linear or branched alkyl of 1 to 8 carbon atoms where nonadjacent methylene units may be replaced by oxygens,
**s** is not less than 1,
**r** is not less than 1,
**s + t** is equal to the value of **r,** and
**k** + **m** + **p + q** is not less than **2,**
and s : t is not less than 10.

2. Method according to Claim 1 wherein **R¹** is a straight-chain, branched or cyclic C₁-C₆ alkyl radical.

3. Method according to one or more of the preceding claims wherein **R²** and **R³** are each hydrogen.

4. Method according to one or more of the preceding claims wherein **R⁴** is alkyl of 1 to 5 carbon atoms.

5. Method according to one or more of the preceding claims wherein less than 0.01 ppm of acid is present.

6. Method according to one or more of the preceding claims conducted at temperatures of 50°C to 150°C.

7. Method according to one or more of the preceding claims wherein said monoalkoxy(aminoalkyl)silane (B) is used in a molar amount of not less than 1.2 and not more than 10 equivalents based on Si-OH units present in said organosiloxane (A).

## Revendications

1. Procédé de fabrication de polyorganosiloxanes à fonction amino de formule générale I
**(SiO_{4/2})**ₖ**(R¹SiO_{3/2})ₘ(R¹₂SiO_{2/2})ₚ(R¹₃SiO_{1/2})_{q}[O_{1/2}SiR¹₂-R-NR²R³)ₛ[O_{1/2}H]ₜ** (I),
selon lequel
(A) des organosiloxanes, qui contiennent des groupes Si-OH, de formule générale (II)
**(SiO_{4/2})**ₖ**(R¹SiO_{3/3})ₘ(R¹₂SiO_{2/2})ₚ(R¹₃SiO_{1/2})_{q}[O_{1/2}H]ᵣ** (II),
sont mis en réaction avec
(B) au moins la quantité stoechiométrique d'un monoalcoxy(aminoalkyl)silane par rapport aux groupes Si-OH de formule générale (III)
**R²R³N-R-SiR¹₂(OR⁴)** (III),
des additifs à effet catalytique choisis parmi un acide, une base ou un composé métallo-organique étant utilisés en quantités de moins de 0,1 ppm d'acide, de moins de 30 ppm de base et de moins de 0,4 % de composé métallo-organique,
**R** signifiant un radical alkylène non substitué ou à substitution halogène de 2 à 12 atomes C,
**R^{x}** signifiant l'hydrogène ou un radical hydrocarboné en C₁-C₁₀ non substitué ou substitué avec des substituants qui sont choisis parmi -CN et halogène,
**R¹** signifiant un atome d'hydrogène ou un radical hydrocarboné en C₁-C₂₀ ou oxyhydrocarboné en C₁-C₁₅ relié à Si-C, non substitué ou substitué avec des substituants qui sont choisis parmi -CN, N**R^{x}**₂, COOH, COO**R^{x}**, halogène, acryle, époxy, -SH, -OH et -CON**R^{x}**₂, dans lequel une ou plusieurs unités méthylène non voisines les unes des autres peuvent chacune être remplacées par des groupes -O-, -CO-, -COO-, -OCO- ou -OCOO-, -S- ou **NR^{x}**, et dans lequel une ou plusieurs unités méthine non voisines les unes des autres peuvent être remplacées par des groupes -N=, -N=N- ou -P=,
**R²** et **R³** signifiant l'hydrogène ou un groupe alkyle non ramifié, ramifié ou cyclique saturé ou insaturé de 1 à 12 atomes C ou un groupe aryle ou un groupe aralkyle, des unités méthylène non voisines pouvant individuellement être remplacées par des atomes d'azote ou des atomes d'oxygène,
**R⁴** signifiant un groupe alkyle linéaire ou ramifié de 1 à 8 atomes C, dans lequel des unités méthylène non voisines peuvent être remplacées par des oxygènes,
**s** signifiant des valeurs d'au moins 1,
**r** signifiant des valeurs d'au moins 1,
**s** + **t** signifiant la valeur de **r,** et
**k** + **m** + **p** + **q** signifiant des valeurs d'au moins 2,
et **s:t** étant supérieur ou égal à 10.

2. Procédé selon la revendication 1, selon lequel **R¹** est un radical alkyle en C₁-C₆ linéaire, ramifié ou cyclique.

3. Procédé selon une ou plusieurs des revendications précédentes, selon lequel **R²** et **R³** signifient l'hydrogène.

4. Procédé selon une ou plusieurs des revendications précédentes, selon lequel **R⁴** signifie un groupe alkyle de 1 à 5 atomes C.

5. Procédé selon une ou plusieurs des revendications précédentes, selon lequel moins de 0,01 ppm d'acide est présent.

6. Procédé selon une ou plusieurs des revendications précédentes, qui est réalisé à des températures de 50 °C à 150 °C.

7. Procédé selon une ou plusieurs des revendications précédentes, selon lequel le monoalcoxy(aminoalkyl)silane (B) est utilisé en une quantité molaire d'au moins 1,2 et d'au plus 10 équivalents par rapport aux unités Si-OH présentes dans l'organosiloxane (A).
